# FASCICULE DE BREVET EUROPEEN

(11) **EP 2 015 861 B1**
(45) Date de publication et mention de la délivrance du brevet: **23.11.2011**
(21) Numéro de dépôt: 07731891.3
(22) Date de dépôt: 06.04.2007
(51) Int. Cl.: B01D 53/94, B01J 23/00, B01J 27/224, F01N 3/022, B01D 46/24

(54) **STRUCTURE DE PURIFICATION INCORPORANT UN SYSTEME DE CATALYSE ELECTROCHIMIQUE**
REINIGUNGSSTRUKTUR MIT INTEGRIERTEM ELEKTROCHEMISCHEM KATALYSESYSTEM
PURIFICATION STRUCTURE INCORPORATING AN ELECTROCHEMICAL CATALYSIS SYSTEM

(30) Priorité: 10.04.2006 FR 0651287
(43) Date de publication de la demande: 21.01.2009
(73) Titulaire: Saint-Gobain Centre de Recherches et d'Etudes Européen, 92400 Courbevoie (FR)
(72) Inventeur: ANDY, Patricia, F-84300 Les Taillades (FR); URFFER, Daniel, F-84450 Saint-Saturnin (FR); MUSTEL, William, F-95160 Montmorency (FR)
(74) Mandataire: Lucas, Francois
(86) Numéro de dépôt international: PCT/FR2007/051090
(87) Numéro de publication internationale: WO 2007/116194

(56) Documents cités:
- EP-A- 1 486 248
- EP-A1- 0 789 135
- EP-A1- 1 486 248
- EP-A2- 1 279 432
- DE-A1- 10 035 330
- FR-A1- 2 860 993
- US-A- 5 232 890
- US-B1- 6 878 354
- ICHKAWA ET AL.: "Material Development of High Porous SiC for Catalyzed Diesel particulate Filters", SAE INTERNATIONAL, 6 March 2003 (2003-03-06),
- ICHKAWA ET AL.: "Material Development of High Porous SiC for Catalyzed Diesel particulate Filters", SAE INTERNATIONAL, 6 March 2003 (2003-03-06),

## Description

La présente invention se rapporte au domaine des structures de purification d'un gaz chargé en polluants gazeux essentiellement du type NOₓ. Plus particulièrement, l'invention se rapporte aux structures en nid d'abeille, notamment utilisées pour traiter les gaz d'échappement d'un moteur diesel ou essence, et incorporant un système combinant un catalyseur A de réduction desdites espèces polluantes du type NOₓ et un catalyseur B d'oxydation d'hydrocarbures HC et/ou d'oxydation des suies et/ou de réactions de vaporéformage du type HC+H₂O → 3/2H₂ + CO et/ou de réactions des gaz à l'eau du type CO+H₂O → H₂ + CO₂.

Les techniques et les problèmes liés à la purification des gaz pollués, notamment en sortie des lignes d'échappement des véhicules automobiles essence ou diesel sont bien connus de l'art. Un catalyseur conventionnel trois voies permet le traitement conjoint des polluants NOₓ, CO et HC et leur conversion en des gaz neutres et chimiquement non nocifs tels que N₂, CO₂ et H₂O. Une très bonne efficacité du système n'est cependant atteinte que par un réglage continuel de la richesse du mélange air-carburant. Il est ainsi connu que le moindre écart par rapport à la stoechiométrie du mélange provoque une forte augmentation des émissions des polluants.

Pour résoudre ce problème, il a été proposé d'incorporer au catalyseur des matériaux permettant temporairement de fixer les NOₓ (souvent appelés dans le métier NOₓ trap) lorsque le mélange est pauvre (c'est à dire sous stoechiométrique). L'inconvénient majeur d'un tel système est cependant que la réduction des NOx ne peut être réalisée qu'au prix d'une surconsommation de carburant. La désorption des NOx piégés sur le catalyseur et leur réduction catalytique en azote gazeux N₂ ne peuvent en effet être obtenues qu'en présence, au niveau du catalyseur de réduction, d'une quantité suffisante des espèces réductrices sous forme d'hydrocarbures ou de monoxyde de carbone CO ou d'hydrogène gazeux H₂. L'hydrogène gazeux pouvant être lui-même obtenu par une réaction catalytique entre les hydrocarbures HC et la vapeur d'eau ou entre le CO et la vapeur d'eau.

Selon une approche différente, le brevet US 6,878,354 décrit une combinaison de catalyseurs d'oxydation des HC et CO et de réduction des NOₓ par voie électrochimique. De tels systèmes apparaissent avantageux car ils permettent une réaction électrochimique entre deux catalyseurs de réduction A et d'oxydation B reliés entre eux à la fois par un conducteur électronique C et un conducteur ionique D. Selon cette publication, un tel système permet notamment d'augmenter la conversion catalytique des espèces polluantes notamment dans un fonctionnement d'un moteur en mélange pauvre.

Pour être efficace, un tel système nécessite cependant l'utilisation d'une substance adsorbant les NOₓ et d'une substance adsorbant les hydrocarbures HC.

Selon un premier mode de réalisation décrit dans ce brevet, les catalyseurs A et B sont déposés sur un support métallique, en mélange avec un conducteur ionique D. Le support métallique fourni les électrons nécessaires au bon fonctionnement du système électrochimique. Cependant, l'utilisation d'un tel support dans une ligne d'échappement d'un moteur automobile, notamment diesel, est problématique essentiellement en raison de sa faible tenue à l'oxydation et de sa résistance chimique médiocre. Par ailleurs ce type de support métallique a l'inconvénient majeur de présenter une faible compatibilité chimique et dilatométrique avec les catalyseurs, qui doivent en outre intégrer, selon l'enseignement fourni dans US 6,878,354, des pièges à NOₓ ou à HC du type oxydes de Baryum, zéolites ou autres oxydes mixtes, également de faible compatibilité chimique avec le support métallique.

Selon un deuxième mode de réalisation décrit dans US 6,878,354, les quatre constituants A, B, C et D sont introduits en mélange sur un support non conducteur céramique constitué par de la cordiérite.

L'efficacité d'un tel système dépend alors fortement des conditions de dépôt des catalyseurs A et B et des conducteurs électroniques C et ioniques D. En effet, les propriétés obtenues sont fortement dépendantes de la dispersion des différentes phases correspondant aux différents constituants sur le support utilisé, une connexion étant nécessaire entre ces quatre éléments pour le bon fonctionnement du système électrochimique. Enfin, le système électrochimique étant constitué de grains de petite taille aléatoirement disposés les uns par rapport aux autres, son efficacité est nécessairement limitée d'une part par les connections entre les grains et d'autre part par la faible quantité des électrolytes (électrons et/ou ions) disponibles pour le bon fonctionnement du système de catalyse électrochimique.

En outre, il est notamment connu, par exemple de part la publication EP 1 566 214, que les supports de catalyseurs céramiques oxydes, en particulier du type cordiérite peuvent être dégradés par les catalyseurs DéNOₓ, du type NOₓ trap.

Le but de la présente invention est de fournir une solution permettant de résoudre les problèmes précédemment décrits. En particulier, un des buts de la présente invention est de fournir une structure pour la purification d'un gaz pollué, en particulier une structure de filtration d'un gaz d'échappement issu d'un moteur diesel chargé en polluants gazeux et en particules solides, susceptible de fonctionner quelque soit la richesse du mélange air/carburant.

Selon un premier aspect, la présente invention se rapporte à une structure, selon la revendication 1, pour la purification d'un gaz d'échappement d'un moteur diesel , incorporant un système électrochimique de traitement dudit gaz constitué par:
- un catalyseur A de réduction des espèces polluantes du type NOₓ,
- un catalyseur B d'oxydation d'hydrocarbures HC,
- un composé C conducteur électronique,
- un composé D conducteur ionique,
   lesdits catalyseurs A et B étant en contact électronique par l'intermédiaire du composé C et en contact ionique par l'intermédiaire du composé D,
   ladite structure étant caractérisée en ce qu'elle est constituée par au moins un matériau inorganique poreux et conducteur ionique et/ou électronique de telle manière que :
- les catalyseurs A et B sont disposés dans la porosité du matériau inorganique,
- le matériau inorganique conducteur électronique, ionique, ou ionique et électronique constitue respectivement l'élément C, l'élément D ou la somme des éléments C et D dudit système électrochimique.

Au sens de la présente description, le matériau inorganique poreux présente une porosité ouverte, mesurée classiquement par porosimétrie au mercure, supérieure à 10%, de préférence supérieure à 20%, voire supérieure à 30%.

Le catalyseur A utilisé pour la réaction de réduction est choisi parmi les catalyseurs bien connus de l'art pour leur activité et de préférence leur sélectivité vis-à-vis des réactions de réduction des NOx. Ils peuvent notamment être choisis parmi les composés de type métaux alcalins ou alcalino-terreux ou des terres rares, qui jouent en outre le rôle de piège à NOₓ, par exemple tels que décrits dans la demande EP 1 566 214, déposés en mélange avec un principe actif incluant des métaux précieux (Pt, Pd, Rh) par adsorption à la surface d'une poudre de grande surface spécifique, par exemple d'alumine.

Le catalyseur B utilisé pour la réaction d'oxydation des hydrocarbures est choisi parmi les catalyseurs bien connus de l'art pour leur activité et de préférence leur sélectivité vis-à-vis des réactions d'oxydation des hydrocarbures. En particulier, les catalyseurs de reformage et de vaporeformage utilisés dans le domaine de la pétrochimie et du raffinage peuvent être utilisés selon l'invention.

Une telle disposition présente par rapport aux structures connues jusqu'à maintenant de nombreux avantages parmi desquelles :
- l'introduction du système catalytique dans la porosité du support permet avantageusement d'augmenter fortement la surface développée de catalyseur accessible aux polluants, et par suite la probabilité de contact et d'échanges entre les espèces réactives,
- le support constitue selon l'invention soit le conducteur électronique C, soit le conducteur ionique D, soit les conducteurs ioniques et électroniques C et D. Cette disposition permet avantageusement de fournir au système électrochimique une quantité illimitée des espèces chargées (ions et/ou électrons), améliorant ainsi de façon sensible les capacités du système,

- un nombre limité des constituants du système doit être déposé sur le support, ce qui diminue fortement la dépendance des performances du système par rapport aux conditions de dépôt du catalyseur sur le support,
- une bonne compatibilité chimique entre le matériau inorganique poreux constituant le support et le système catalytique,
- la réduction des coûts de production, liée à une méthode plus simple de dépôt du fait du nombre plus faible de composés à déposer,
- une augmentation de l'efficacité catalytique, une quantité plus importante de catalyseur pouvant être déposée du fait du nombre limité de constituants devant être déposés dans la porosité de la matrice.

Le système électrochimique selon l'invention peut être mis en oeuvre selon différents modes possibles, selon toute technique connue de l'art :
Selon un premier mode, le matériau inorganique poreux conducteur ionique et/ou électronique, constitutif de ou recouvrant la structure, est obtenu par un traitement de dopage, de réduction ou d'oxydation d'un matériau poreux initialement pas ou peu conducteur ionique et/ou électronique.
Selon un mode alternatif, le matériau inorganique poreux conducteur ionique et/ou électronique peut être obtenu par mélange d'un matériau poreux initialement pas ou peu conducteur ionique et/ou électronique avec un matériau conducteur ionique et/ou électronique.

Par exemple, le matériau inorganique poreux comprend ou est constitué par un matériau inorganique conducteur électronique du type carbure, par exemple le SiC, ou siliciure, par exemple MoSi₂ ou borure, par exemple TiB₂, ou de la famille La₁₋ₓSrₓMnO₃ ou du type oxydes mixtes de gadolinium et cérium (CGO).

Le matériau inorganique poreux peut également comprendre ou être constitué par un matériau inorganique conducteur par ion oxygène du type structure fluorite, par exemple la zircone stabilisée par CaO ou par Y₂O₃, les oxydes mixtes de gadolinium et cérium, ou de structure pérovskite, par exemple le gallate, les composés à base de Lanthane du type LaAlO₃ ou LaGaO₃ ou La₁₋ₓSrₓGa1_{-y}Mg_{y}O₃ ou de structure du type bimevox, par exemple Bi₂V1₋ₓmeₓO_{z}, ou de structure du type lamox, par exemple La₂Mo₂O₉, ou encore de structure apatite, par exemple Me₁₀ (XO₄) ₆Y₂, ou du type oxydes mixtes de gadolinium et cérium (CGO). Le CGO a l'avantage d'être à la fois conducteur ionique et conducteur électronique.

Le matériau inorganique poreux peut comprendre ou être constitué par un matériau inorganique conducteur protonique du type pérovskite, par exemple SrCe₁₋ₓMₓO_{3-α} où M est une terre rare, typiquement le composé SrCeₓYb₁₋ₓO_{3-α}, ou du type BaCe₁₋ₓMₓO_{3-α}, par exemple le composé BaCeO₃, ou encore un composé de la famille LaₓSr₁₋ₓScO_{3-α}, par exemple La_{0,9}Sr_{0,1}ScO_{3-α}.

Selon un mode possible, le matériau inorganique poreux est à base de carbure de silicium SiC, de préférence recristallisé à une température comprise entre 2100 et 2400°C. En particulier, le matériau inorganique peut être à base de SiC dopé, par exemple par de l'aluminium ou de l'azote, et de telle façon que sa résistivité électronique soit inférieure de préférence à 20 Ohm.cm, de préférence encore à 15 Ohm.cm, de manière plus préférée à 10 Ohm.cm à 400°C. Par l'expression « à la base d'un même matériau », on entend au sens de la présente description que le matériau est constitué d'au moins 25% poids, de préférence d'au moins 45% poids et de manière très préférée d'au moins 70% poids dudit matériau.

Le matériau inorganique poreux peut également comprendre ou être constitué par un mélange de carbure de silicium éventuellement dopé et au moins un matériau inorganique conducteur par ion oxygène par exemple de structure fluorite (par exemple, zircone stabilisée par CaO ou par Y₂O₃, oxydes mixtes de gadolinium et cérium), ou de structure pérovskite (gallate,composés à base de Lanthane par exemple LaAlO₃ ou LaGaO₃ ou La₁₋ₓSrₓGa₁₋ₓMg_{y}O₃ ou de structure bimevox (par exemple Bi₂V₁₋ₓMeₓO_{z}), ou de structure lamox (par exemple La₂MO₂O₉), ou de structure apatite (par exemple Me₁₀(XO₄)₆Y₂).

Selon une autre réalisation, le matériau inorganique poreux comprend ou est constitué par un mélange de carbure de silicium éventuellement dopé et au moins un matériau inorganique conducteur protonique par exemple du type pérovskite (par exemple SrCe₁₋ₓMₓO_{3-α}. où M est une terre rare, par exemple le composé SrCeₓYb₁₋ₓO_{3-α}) où du type BaCe₁₋ₓMₓO_{3-α} (par exemple le composé BaCeO₃), ou encore un composé de la famille LaxSr₁₋ₓScO_{3-α} (par exemple La_{0,9}Sr_{0,1}SCO_{3-α}).

Dans une autre réalisation possible, le matériau inorganique poreux comprend ou est constitué de carbure de silicium éventuellement dopé, dans la porosité duquel est déposée un mélange du catalyseur A de réduction, du catalyseur B d'oxydation et d'au moins un matériau inorganique D conducteur par ion oxygène par exemple de structure fluorite (tel que zircone stabilisée par CaO ou par Y₂O₃, oxydes mixtes de gadolinium et cérium), ou de structure perovskite (gallate, composés à base de Lanthane du type LaAlO₃ ou LaGaO₃ ou La₁₋ₓSrₓGa1_{-y}Mg_{y}O₃, ou de structure bimevox (par exemple Bi₂V1₋ₓMeₓO_{z}), ou de structure lamox (par exemple La₂Mo₂O₉), ou de structure apatite (par exemple Me₁₀(XO₄)₆Y₂).

Selon un autre mode, le matériau inorganique poreux comprend ou est constitué de carbure de silicium éventuellement dopé, dans la porosité duquel est déposée un mélange du catalyseur A de réduction, du catalyseur B d'oxydation et d'au moins un matériau inorganique D conducteur protonique par exemple du type pérovskite (par exemple SrCe₁₋ₓMₓO_{3-α}. ou M est une terre rare, par exemple le composé SrCeₓYb₁₋ₓO_{3-α}) ou du type BaCe₁₋ₓMₓO_{3-α} (par exemple le composé BaCeO₃), ou encore un composé de la famille LaₓSr₁₋ₓScO_{3-α} (par exemple La_{0,9}Sr_{0,1}ScO_{3-α}).

La présente invention trouve son application dans les structures utilisées pour la purification et la filtration d'un gaz d'échappement d'un moteur diesel. De telles structures, généralement désignées sous le terme filtres à particules, comprennent au moins un et de préférence une pluralité de blocs monolithiques en nid d'abeille. A la différence des dispositifs de purification précédemment décrits, dans de tels filtres, le ou lesdits blocs comprenant un ensemble de conduits ou canaux adjacents d'axes parallèles entre eux séparés par des parois poreuses, obturés par des bouchons à l'une ou l'autre de leurs extrémités pour délimiter des conduits d'entrée s'ouvrant suivant une face d'admission des gaz et des conduits de sortie s'ouvrant suivant une face d'évacuation des gaz, de telle façon que le gaz traverse les parois poreuses. Des exemples de telles structures assemblées ou non assemblées sont par exemple décrits dans les publications EP 0816065, EP 1142619, EP1306358 ou encore EP 1591430.

Dans de telles structures filtrantes, les gaz sont forcés de traverser les parois. Les travaux menés par la demanderesse ont montré que l'utilisation d'un système de catalyseur électrochimique tel que précédemment décrit permet de façon surprenante d'une part une très bonne conversion des espèces polluantes sans pour autant augmenter sensiblement la perte de charge engendrée par l'introduction du filtre sur la ligne d'échappement.

Une porosité trop faible du matériau constituant les parois filtrantes conduit à une perte de charge trop élevée. Une porosité trop élevée du matériau constituant les parois filtrantes conduit à une efficacité de filtration insuffisante.

Un tel système contribue en outre à améliorer l'efficacité de régénération du filtre en favorisant un taux d'oxydation plus important des suies.

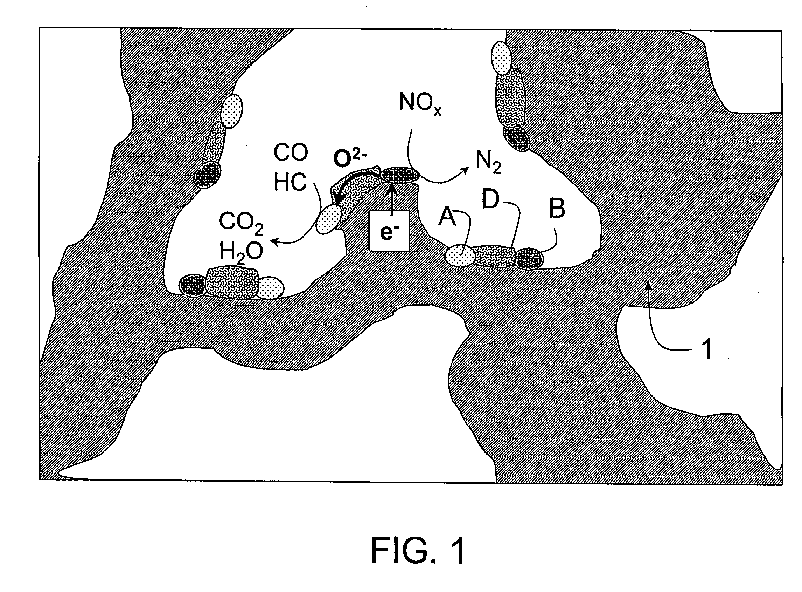

L'invention et ses avantages seront mieux compris à la lecture des modes de réalisation non limitatifs et de l'exemple qui suivant :
La figure 1 est une représentation schématique en coupe d'un morceau de paroi par exemple d'un filtre catalytique selon un premier mode de réalisation de l'invention, incorporant dans sa porosité un premier système de catalyse électrochimique.
La figure 2 est une représentation schématique en coupe d'un morceau de paroi par exemple d'un filtre catalytique selon un deuxième mode de réalisation de l'invention, incorporant dans sa porosité un second système de catalyse électrochimique.
Dans le mode de réalisation représenté par la figure 1, le matériau constitutif des parois du filtre est constitué d'un matériau conducteur électronique, par exemple du SiC dopé par de l'aluminium Al, dont la porosité mercure est typiquement proche de 45%. Dans la porosité du support a été déposé selon des techniques connues, typiquement par imprégnation, un système de catalyse électrochimique comprenant
   - le catalyseur de réduction A permet la réduction des NOₓ en N₂,
   - et le catalyseur B d'oxydation permet l'oxydation des hydrocarbures HC et du CO en CO₂ et H₂O, selon les réactions catalytiques bien connues
   - un conducteur ionique D par ions oxygène O²⁻, par exemple du type YZS (Yttria Stabilized Zirconia).

Le catalyseur A est typiquement constitué par un principe actif incluant par exemple des métaux précieux choisis parmi Pt, Pd, Rh, de préférence adsorbé sur la surface d'une poudre de grande surface spécifique, par exemple d'alumine.

Selon un mode de réalisation possible mais non obligatoire, le catalyseur A peut inclure ou être associé à un matériau adsorbant les NOₓ, par exemple un composé de métaux alcalins ou alcalino-terreux ou des terres rares.

Selon ce mode de réalisation, les électrons nécessaires à la réaction de réduction des NOₓ sont avantageusement directement fournis par le support constitué de SiC conducteur électronique, ce qui permet d'assurer le fonctionnement de la pile avec une quantité d'électrons sensiblement constante et non limitée par la taille de l'électrolyte solide. De façon surprenante, comme il sera explicité par la suite, des taux de purification des gaz pollués améliorés ont été obtenus selon ce mode, bien que la conduction électronique du matériau constituant le support soit relativement faible, par comparaison avec la conductivité électronique d'un métal.

Les anions O²⁻ également nécessaires à la réaction de réduction des NOₓ sont apportés par le conducteur ionique D, lui-même en contact ionique avec le catalyseur d'oxydation B.

Le catalyseur B est typiquement constitué par un principe actif incluant des métaux précieux (Pt, Pd, Rh) typiquement déposé par adsorption sur la surface d'une poudre de grande surface spécifique, par exemple à base d'oxyde de zirconium et de cérium.

Selon un mode de réalisation possible mais non obligatoire, le catalyseur B peut inclure ou être associé à un matériau adsorbant les hydrocarbures, par exemple du type zéolithe.

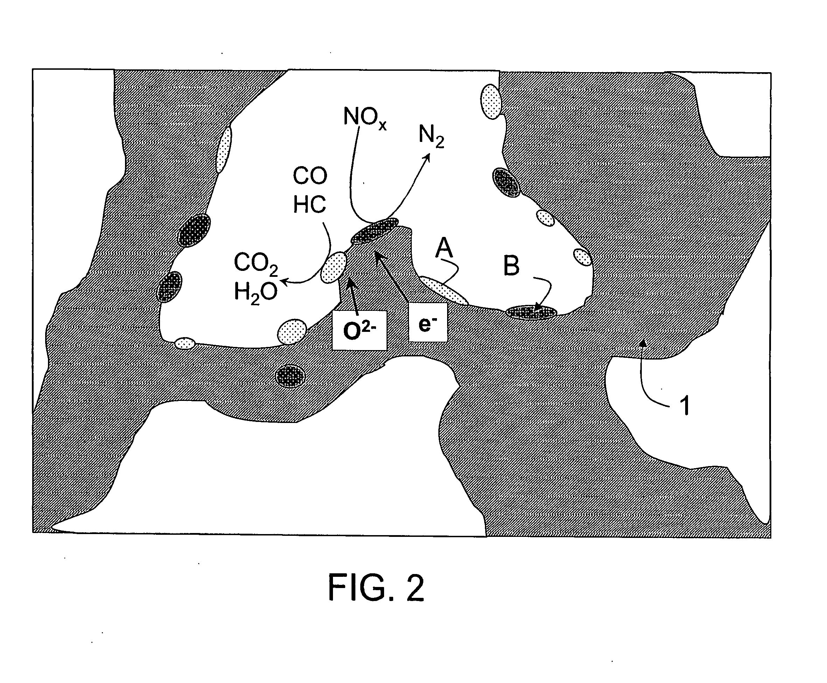

Dans le mode de réalisation schématisé par la figure 2, le matériau constitutif des parois du filtre est conducteur électronique et ionique par ion O²⁻.
Dans la porosité du support a été déposé cette fois-ci un système de catalyse électrochimique comprenant uniquement le catalyseur de réduction A permet la réduction des NOₓ en N₂ et le catalyseur B d'oxydation permet l'oxydation des hydrocarbures HC et du CO en CO₂ et H₂O. Comme indiqué sur la figure 2, les particules des catalyseurs A et B sont répartis aléatoirement dans la porosité du matériau support et au contact de celui-ci. Dans une telle configuration, le support sert d'électrolyte solide et permet indépendamment l'apport des ions O²⁻ nécessaires à la réduction des hydrocarbures et du CO ainsi que l'apport des électrons nécessaires à l'oxydation des NOx.

Ce mode de réalisation présente de nombreux avantages :
- les électrons nécessaires à la réaction de réduction des NOₓ ainsi que les anions nécessaires à la réaction d'oxydation de HC et CO sont avantageusement directement fournis par le support, ce qui permet d'assurer le fonctionnement de la pile avec une quantité d'espèces conductrices quasiment constante et non limitée par la taille du ou des électrolytes solides,
- les réactions d'oxydation et de réduction du système électrochimique fonctionnent de ce fait quasiment de façon indépendante,
- le fonctionnement du système de catalyse électrochimique est améliorée puisque la totalité des particules de catalyseurs A et B sont actives : la connexion entre les quatre constituants A, B, C et D constituant le système électrochimique est nécessairement réalisée, quelle que soit la disposition relative des particules A et B dans la porosité du matériau constituant les parois.

Dans le mode illustré par les figures 1 et 2, la conduction ionique est assurée par un matériau conducteur ionique par ion O²⁻. Bien entendu, sans sortir du cadre de l'invention, tout autre matériau assurant ce type de conduction ou une conduction par migration d'autres ions (cations ou anions) peut être utilisé, notamment les matériaux connus pour leur conductivité protonique, ou par ion carbonate, tel que décrit dans le brevet US 6,878,354.

Les effets obtenus pour le mode de réalisation illustré par la figure 1 ont été mesurés et quantifiés selon l'exemple qui suit.

### EXEMPLE :

Dans un premier temps, on a synthétisé, selon des techniques bien connues, un filtre céramique assemblé en SiC dont la porosité ouverte des parois filtrantes est proche d'environ 40%. La synthèse a été effectuée dans des conditions permettant d'incorporer le dopant Al dans une proportion massique d'environ 200 ppm. Un tel dopage a permis d'obtenir une structure présentant une conductivité électronique sensiblement améliorée, c'est-à-dire une résistivité inférieure à 10 ohm.cm à 400°C.

Plus précisément, la structure filtrante est obtenue par assemblage d'éléments filtrants en carbure de silicium d'abord extrudés, séchés puis cuits selon des techniques bien connues et liés par un ciment de jointement selon les techniques décrites par exemple dans le brevet EP 1 142 619. Les parties filtrantes se caractérisent par un ensemble de conduits ou canaux adjacents d'axes parallèles entre eux séparés par des parois poreuses, obturés par des bouchons à l'une ou l'autre de leurs extrémités pour délimiter des conduits d'entrée s'ouvrant suivant une face d'admission des gaz et des conduits de sortie s'ouvrant suivant une face d'évacuation des gaz, de telle façon que le gaz traverse les parois poreuses.

On a utilisé initialement dans cet exemple deux fractions de grains de carbure de silicium de teneur massique en Al d'environ 200 ppm. Une première fraction présente un diamètre médian d₅₀ compris entre 5 µm et 50 µm, au moins 10% en masse des grains composant cette fraction présentent un diamètre supérieur à 5 µm. La deuxième fraction présente un diamètre médian des grains inférieur à 5 µm. Les deux fractions sont mélangées dans un rapport massique égal à 1 avec un liant temporaire du type méthylcellulose et un agent porogène organique de polyéthylène.

Les caractéristiques géométriques principales du filtre ainsi obtenu sont reportées dans le tableau 1:

**Tableau 1**

| Géométrie des canaux | Carré |
|---|---|
| Densité de canaux | 180 cpsi (canaux par inch carré, 1 inch = 2,54 cm, soit environ 28 canaux/cm²) |
| Epaisseur des parois | 350 µm |
| Longueur | 15,2 cm |
| Largeur | 3, 6 cm |
| Volume | 2,47 litres |
| Porosité | Environ 47% |
| Diamètre médian de pores | Environ 15µm |

Les catalyseurs A et B et le composé conducteur ionique D ont été synthétisés de la manière suivante :

### Catalyseur A :

On imprègne 500g d'une poudre d'alumine gamma commercialisée par Sasol par une solution aqueuse de nitrate de Ba. L'ensemble est ensuite séché à 110°C puis calciné à 600°C pendant 3 heures sous air, de manière à obtenir une poudre de grains d'alumine revêtus de BaO. Cette poudre est ensuite imprégnée, selon les techniques bien connues, dans une solution aqueuse de chlorure de dinitrodiamine de platine puis séchée à 110°C pendant 3 heures, et enfin portée à 250°C pendant 2 heures de manière à obtenir un catalyseur A.

### Catalyseur B :

300 grammes d'une poudre zéolithe de type Mordénite sont mis en suspension dans une solution de d'hydroxy-nitrate de zirconium, à laquelle est ajoutée une solution aqueuse d'ammonium de manière à ajuster à au moins PH 8. La solution est ensuite filtrée, séchée à 110°C, puis calcinée à 500°C pendant une heure. La poudre ainsi obtenue est dispersée dans une solution aqueuse de nitrate de rhodium, puis filtrée, séchée à 400°C pendant une heure pour obtenir le catalyseur B.

### Conducteur ionique D:

Le conducteur ionique D utilisé est une poudre de YSZ (zirconia powder basic grade TZ) commercialisée par la société Tosoh.

La granulométrie des poudres de catalyseurs A, B et du conducteur ionique D est adaptée à la porosité du corps céramique poreux.

Dans un deuxième temps, la structure brute de filtre est ensuite plongée dans un bain d'une solution aqueuse contenant les poudres des catalyseurs A, B et le composé D, dans des proportions permettant d'obtenir environ 2% en masse de chaque composé sur le support, par rapport à la masse totale du support.

Le filtre est imprégné par la solution selon un mode de mise en oeuvre similaire à celui décrit dans le brevet US 5,866,210. Le filtre est ensuite séché à environ 150°C puis chauffé à une température d'environ 500°C. On obtient ainsi un filtre catalytique selon l'invention.

Les propriétés du filtre catalytique ainsi obtenu ont été testées selon différents teste

### 1°) test de conversion des NOx:

Les performances du filtre ont été mesurées à une température de 400°C grâce aux deux mélanges synthétiques de gaz selon le tableau 2, caractéristiques des gaz d'échappement dans un fonctionnement d'un moteur Diesel en mélange pauvre (mélange 1) et dans un fonctionnement d'un moteur Diesel en mélange riche (mélange 2).

**Tableau 2**

| Constituant | Mélange 1 (pauvre) | Mélange 2 (riche) |
|---|---|---|
| HC (ppm volume) | 1000 | 1000 |
| CO (ppm volume) | 600 | 600 |
| NOₓ (ppm volume) | 500 | 500 |
| CO₂ (% volume) | 6 | 6 |
| H₂O (% volume) | 10 | 10 |
| O₂ (% volume) | 10 | 0,5 |
| N₂ | reste | reste |

Le test est opéré de la manière suivante : Le mélange de gaz pauvre 1 passe d'abord sur le filtre catalysé maintenu dans un four électrique à 400°C. Toutes les deux minutes, la composition des gaz est basculée sur le mélange de gaz riche 2 pendant 5 secondes, avant d'être rebasculée sur le mélange 1 et ainsi de suite. La composition des gaz en sortie de four est analysée après stabilisation de façon à connaître la quantité de NOₓ convertie.

Le test tel qu'il vient d'être décrit a été mené dans les mêmes conditions sur un filtre comprenant uniquement les catalyseurs A et B dans les mêmes proportions, et sur le filtre électrocatalysé contenant les composantes A, B et D, dont la méthode de synthèse a été précédemment décrite. Les résultats sont reportés dans le tableau 3.

**Tableau 3**

| | Filtre sans D | Filtre électrocatalysé |
|---|---|---|
| Taux de conversion des NOₓ (% volume) | 40 | 50 |

### 2°) test de perte de charge (pressure loss):

Les deux filtres précédents (non électrocatalysé et electrocatalysé), ont été montés sur banc moteur avec un régime à 3000 tr/min et un couple de 50 Nm afin d'obtenir une charge en suies dans le filtre de 7g/L de filtre.

La perte de charge a été mesurée sur filtre selon les techniques de l'art, pour un débit d'air de 600 m³/h dans un courant d'air ambiant. Par perte de charge, on entend au sens de la présente invention la pression différentielle existant entre l'amont et l'aval du filtre.

On réalise des essais de conversion NOx dans les mêmes conditions que précédemment. Il a été vérifié que les taux de conversion sont similaires.

La perte de charge est de nouveau mesurée sur les filtres après un deuxième test de conversion des NOₓ. De façon surprenante il a été observé que la perte de charge après ce deuxième test de conversation est plus faible sur le filtre selon l'invention que celle sur le filtre non electrocatalysé. Sans que cela puisse être considéré comme une quelconque théorie, une telle diminution pourrait s'expliquer par une action inattendue du système électrochimique selon l'invention sur l'oxydation des suies.

Les résultats sont reportés dans le tableau 4.

**Tableau 4**

| Perte de charge mesurée en mbars | Filtre sans D | Filtre électrocatalysé |
|---|---|---|
| avant chargement en suies | 51 | 53 |
| Après chargement en suies à 7 g/L | 101 | 102 |
| Après deuxième test de conversion des NOₓ | 102 | 92 |

## Revendications

1. Structure pour la purification et la filtration d'un gaz d'échappement d'un moteur diesel, comprenant au moins et de préférence une pluralité de blocs monolithiques en nid d'abeille, le ou lesdits blocs comprenant un ensemble de conduits ou canaux adjacents d'axes parallèles entre eux séparés par des parois poreuses, obturés par des bouchons à l'une ou l'autre de leurs extrémités pour délimiter des conduits d'entrée s'ouvrant suivant une face d'admission des gaz et des conduits de sortie s'ouvrant suivant une face d'évacuation des gaz, de telle façon que le gaz traverse les parois poreuses, ladite structure étant **caractérisée en ce qu'**elle incorpore un système électrochimique de traitement dudit gaz constitué par:
- un catalyseur A de réduction des espèces polluantes du type NOₓ,
- un catalyseur B d'oxydation d'hydrocarbures HC,
- un composé C conducteur électronique,
- un composé D conducteur ionique,
lesdits catalyseurs A et B étant en contact électronique par l'intermédiaire du composé C et en contact ionique par l'intermédiaire du composé D,
ladite structure étant constituée par au moins un matériau inorganique poreux et conducteur ionique et/ou électronique de telle manière que :
- les catalyseurs A et B sont disposés dans la porosité du matériau inorganique,
- le matériau inorganique conducteur électronique, ionique, ou ionique et électronique constitue respectivement l'élément C, l'élément D ou la somme des éléments C et D dudit système électrochimique.

2. Structure selon la revendication 1, dans laquelle le matériau inorganique poreux est conducteur électronique et constitue l'élément C du système électrochimique.

3. Structure selon la revendication 1, dans laquelle le matériau inorganique poreux est conducteur électronique et conducteur ionique et constitue les éléments C et D du système électrochimique.

4. Structure selon l'une des revendications précédentes, dans laquelle le matériau inorganique poreux conducteur ionique et/ou électronique est obtenu par un traitement de dopage, de réduction ou d'oxydation d'un matériau poreux initialement pas ou peu conducteur ionique et/ou électronique.

5. Structure selon l'une des revendications 1 à 3, dans laquelle le matériau inorganique poreux conducteur ionique et/ou électronique est obtenu par mélange d'un matériau poreux initialement pas ou peu conducteur ionique et/ou électronique avec un matériau conducteur ionique et/ou électronique.

6. Structure selon l'une des revendications précédentes, dans laquelle le matériau inorganique poreux comprend ou est constitué par un matériau inorganique conducteur électronique du type carbure, par exemple le SiC, ou siliciure, par exemple MoSi₂ ou borure, par exemple TiB₂, ou de la famille La₁₋ₓSrₓMnO₃ ou du type oxydes mixtes de gadolinium et cérium CGO.

7. Structure selon l'une des revendications précédentes, dans laquelle le matériau inorganique poreux comprend ou est constitué par un matériau inorganique conducteur par ion oxygène du type structure fluorite par exemple, zircone stabilisée par CaO ou par Y2O3, oxydes mixtes de gadolinium et cérium, ou de structure perovskite du type gallate, composés à base de Lanthane, par exemple LaAlO₃ ou LaGaO₃ ou La₁₋ₓSr₁₋ₓGa1-_{y}Mg_{y}O₃ ou de structure bimevox, par exemple Bi₂V1₋ₓMeₓO₂ ou de structure lamox, par exemple La₂MO₂O₉) ou de structure apatite, par exemple Me₁₀(XO₄)₆Y₂.

8. Structure selon l'une des revendications 1 à 6, dans laquelle le matériau inorganique poreux comprend ou est constitué par un matériau inorganique conducteur protonique du type pérovskite, par exemple SrCe₁₋ₓMₓO_{3-α} où M est une terre rare, par exemple le composé SrceₓYb₁₋ₓO_{3-α} ou du type BaCe₁₋ₓMₓO_{3-α}, par exemple le composé BaCeO₃, ou encore un composé de la famille LaₓSr₁₋ₓScO_{3-α}, par exemple La_{0,9}Sr_{0,1}SCO_{3-α}.

9. Structure selon la revendication 1 à 5, dans laquelle le matériau inorganique poreux est à base de carbure de silicium SiC.

10. Structure selon la revendication 9, dans laquelle le matériau inorganique est à base de SiC dopé, par exemple par de l'aluminium ou de l'azote, et de telle façon que sa résistivité électronique soit inférieure à 20 Ohm.cm à 400°C.

11. Structure selon la revendication 9 ou 10, dans laquelle le matériau inorganique poreux comprend ou est constitué par un mélange de carbure de silicium éventuellement dopé et au moins un matériau inorganique conducteur par ion oxygène par exemple du type structure fluorite ou de structure perovskite ou de structure bimevox ou de structure lamox ou de structure apatite ou d'au moins un matériau inorganique conducteur protonique par exemple du type perovskite, ou du type BaCe₁₋ₓMₓO_{3-α}, ou encore un composé de la famille LaₓSr₁₋ₓScO_{3-α}.

12. Structure selon la revendication 9 ou 10, dans laquelle le matériau inorganique poreux comprend ou est constitué par du carbure de silicium éventuellement dopé, dans la porosité duquel est déposée un mélange du catalyseur A de réduction, du catalyseur B d'oxydation et d'au moins un matériau inorganique conducteur par ion oxygène par exemple du type structure fluorite, ou de structure perovskite ou de structure bimevox ou de structure lamox ou de structure apatite ou d'au moins un matériau inorganique conducteur protonique par exemple du type perovskite ou du type BaCe₁₋ₓMₓO_{3-α} ou encore un composé de la famille LaₓS₁₋ₓScO_{3-α}.

## Claims

1. A structure for the purification and filtration of an exhaust gas from a diesel engine, comprising at least one and preferably a plurality of monolithic honeycomb blocks, said block or blocks comprising an assembly of adjacent conduits or channels with axes parallel to each other, separated by porous walls, closed by stoppers at one or the other of their ends in order to delimit inlet conduits opening along a face for the admission of gases and outlet conduits opening along a face for the evacuation of gases, so that the gas passes through the porous walls, said structure being **characterized in that** it incorporates an electrochemical system for treating said gas, consisting of:
- a catalyst A for reducing contaminant species of the NOₓ type,
- a catalyst B for oxidizing hydrocarbons HC,
- an electron-conducting compound C,
- an ion-conducting compound D,
said catalysts A and B being in electronic contact via the compound C and in ionic contact via the compound D, said structure consisting of at least one ion-conducting and/or electron-conducting porous inorganic material so that:
- the catalysts A and B are deposited in the porosity of the inorganic material,
- the electron-, ion- or ion- and electron-conducting inorganic material constitutes respectively the element C, the element D, or the sum of the elements C and D of said electrochemical system.

2. The structure as claimed in claim 1, **characterized in that** the porous inorganic material is an electron-conductor and constitutes the element C of the electrochemical system.

3. The structure as claimed in claim 1, **characterized in that** the porous inorganic material is an electron-conductor and ion-conductor and constitutes the elements C and D of the electrochemical system.

4. The structure as claimed in one of the preceding claims, **characterized in that** the ion-conducting or electron-conducting porous inorganic material is obtained by a doping, reducing or oxidizing treatment of a porous material that is initially not, or only slightly, an ion-conductor and/or an electron-conductor.

5. The structure as claimed in one of claims 1 to 3, **characterized in that** the ion-conducting and/or electron-conducting porous inorganic material is obtained by mixing a porous material that is initially not, or only slightly, an ion-conductor and/or an electron-conductor with an ion conducting and/or electron-conducting material.

6. The structure as claimed in one of the preceding claims, **characterized in that** the porous inorganic material includes or consists of an electron-conducting inorganic material of the carbide type, for example SiC, or silicide type, for example MoSi₂, or boride type, for example TiB₂, or of the La₁₋ₓSrₓMnO₃ family or of the gadolinium and cerium mixed oxide CGO type.

7. The structure as claimed in one of the preceding claims, **characterized in that** the porous inorganic material includes or consists of an inorganic material that conducts by the oxygen ion, of the fluorite structure type for example, zirconia stabilized by CaO or by Y₂O₃, mixed gadolinium and cerium oxides, or of a perovskite structure of the gallate type, compounds based on lanthanum, for example LaAlO₃ or LaGaO₃ or La₁₋ₓSrₓGa_{1-y}M_{y}O₃ type or of a bimevox structure, for example Bi₂V₁₋ₓMeₓO_{z}, or of a lamox structure, for example La₂MO₂O₉, or furthermore of the apatite structure, for example Me₁₀(XO₄)₆Y₂.

8. The structure as claimed in one of claims 1 to 6, **characterized in that** the porous inorganic material includes or consists of a proton-conducting inorganic material of the perovskite type, for example SrCe₁₋ₓMₓO_{3-α} where M is a rare earth, for example the compound SrCeₓYb₁₋ₓO_{3-α}, or of the BaCe₁₋ₓMₓO_{3-α} type, for example the compound BaCeO₃, or furthermore a compound of the LaₓSr₁₋ₓSCO_{3-α} family, for example La_{0.9}Sr_{0.1}SCO_{3-α}.

9. The structure as claimed in claims 1 to 5, **characterized in that** the porous inorganic material is based on silicon carbide SiC.

10. The structure as claimed in claim 9, **characterized in that** the inorganic material is based on SiC, doped for example with aluminum or nitrogen, and in such a way that its electron resistivity is less than 20 ohm.cm at 400°C.

11. The structure as claimed in claim 9 or 10, **characterized in that** the porous inorganic material includes or consists of a mixture of silicon carbide, possibly doped, and at least one inorganic material that is conductive by the oxygen ion, for example with a fluorite structure or a perovskite structure or a bimevox structure or a lamox structure or an apatite structure or at least one proton-conducting inorganic material, for example of the perovskite type, or of the Bace₁₋ₓMₓO_{3-α} type, or furthermore a compound of the LaₓSr₁₋ₓScO_{3-α} family.

12. The structure as claimed in claim 9 or 10, **characterized in that** the porous inorganic material includes or consists of silicon carbide, possibly doped, in the porosity of which is deposited a mixture of the reduction catalyst A, the oxidation catalyst B and at least one inorganic material that conducts by the oxygen ion, for example with a fluorite structure, or of the perovskite structure type or of the bimevox structure or of the lamox structure or of the apatite structure or of at least one proton-conducting inorganic material, for example of the perovskite type or of the BaCe₁₋ₓMₓO_{3-α} type, or furthermore a compound of the LaₓSr₁₋ₓSCO_{3-α} family.

## Patentansprüche

1. Struktur für die Reinigung und die Filterung eines Abgases eines Dieselmotors, die wenigstens und vorzugsweise eine Vielzahl von wabenförmigen monolithischen Blöcken umfasst, wobei der oder die Blöcke eine Anordnung von einander benachbarten, durch poröse Wände getrennte Leitungen oder Kanäle mit zueinander parallelen Achsen umfassen, die an dem einen oder dem anderen ihrer Enden durch Stopfen verschlossen sind, um Eintrittsleitungen, die sich an einer Seite zum Zuführen der Gase öffnen, sowie Austrittsleitungen, die sich an einer Seite zum Abführen der Gase öffnen, zu begrenzen, derart, dass das Gas die porösen Wände durchströmt, wobei die Struktur **dadurch gekennzeichnet ist, dass** sie ein elektrochemisches System zur Behandlung des Gases umfasst, bestehend aus:
- einem Katalysator A zur Reduktion der verunreinigenden Spezies vom Typ NOₓ,
- einem Katalysator B zur Oxidation von Kohlenwasserstoffen HC,
- einer elektronenleitenden Verbindung C,
- einer ionenleitenden Verbindung D,
wobei die Katalysatoren A und B mittels der Verbindung C in elektronischem Kontakt und mittels der Verbindung D in ionischem Kontakt sind,
wobei die Struktur aus wenigstens einem anorganischen, porösen und ionen- und/oder elektronenleitenden Material besteht, derart, dass:
- die Katalysatoren A und B in den Poren des anorganischen Materials angeordnet sind,
- das anorganische, elektronenleitende, ionenleitende oder ionen- und elektronenleitende Material das Element C, das Element D bzw. die Summe aus den Elementen C und D des elektrochemischen Systems bildet.

2. Struktur nach Anspruch 1, wobei das anorganische, poröse Material elektronenleitend ist und das Element C des elektrochemischen Systems bildet.

3. Struktur nach Anspruch 1, wobei das anorganische, poröse Material elektronenleitend und ionenleitend ist und die Elemente C und D des elektrochemischen Systems bildet.

4. Struktur nach einem der vorstehenden Ansprüche, wobei das anorganische, poröse, ionen- und/oder elektronenleitende Material durch eine Dotierungs-, Reduktions- oder Oxidationsbehandlung eines porösen Materials, das anfangs nicht oder kaum ionen- und/oder elektronenleitend ist, erhalten wird.

5. Struktur nach einem der Ansprüche 1 bis 3, wobei das anorganische, poröse, ionen- und/oder elektronenleitende Material durch Mischen eines porösen, anfangs nicht oder kaum ionen- und/oder elektronenleitenden Materials mit einem ionen- und/oder elektronenleitenden Material erhalten wird.

6. Struktur nach einem der vorstehenden Ansprüche, wobei das anorganische, poröse Material ein anorganisches, elektronenleitendes Material vom Typ Carbid, beispielsweise SiC, oder Silicid, zum Beispiel MoSi₂, oder Borid, beispielsweise TiB₂, oder aus der Familie La₁₋ₓSrₓMnO₃ oder vom Typ Mischoxide aus Gadolinium und Cer CGO umfasst oder hiervon gebildet ist.

7. Struktur nach einem der vorstehenden Ansprüche, wobei das anorganische, poröse Material ein anorganisches, durch Sauerstoffionen leitendes Material, beispielsweise vom Typ Fluorit-Struktur, CaO- oder Y2O3-stabilisiertes Zirkonoxid, Mischoxide aus Gadolinium und Cer, oder mit Perowskit-Struktur vom Typ Gallat, Verbindungen auf Lanthan-Basis, beispielsweise LaAlO₃ oder LaGaO₃ oder La₁₋ₓSrₓGa1-_{y}Mg_{y}O₃, oder mit Bimevox-Struktur, zum Beispiel Bi₂ V1_{- x}MeₓO_{z}, oder mit Lamox-Struktur, beispielsweise La₂Mo₂O₉, oder mit Apatit-Struktur, zum Beispiel Me₁₀(XO₄)₆Y₂, umfasst oder hiervon gebildet ist.

8. Struktur nach einem der Ansprüche 1 bis 6, wobei das anorganische, poröse Material ein anorganisches, protonenleitendes Material vom Typ Perowskit, beispielsweise SrCe₁₋ₓMₓO_{3-α}, worin M eine Seltene Erde ist, beispielsweise die Verbindung SrCeₓYb₁₋ₓO_{3-α} oder vom Typ BaCe)₁₋ₓMₓO_{3-α}, beispielsweise die Verbindung BaCeO₃, oder aber eine Verbindung aus der Familie LaₓSr₁₋ₓScO_{3-α}, beispielsweise La_{0,9}Sr_{0,1}ScO_{3-α}, umfasst oder hiervon gebildet ist.

9. Struktur nach Anspruch 1 bis 5, wobei das anorganische, poröse Material auf der Basis von Siliziumcarbid SiC ist.

10. Struktur nach Anspruch 9, wobei das anorganische Material auf der Basis von dotiertem SiC, beispielsweise mit Aluminium oder Stickstoff, und derart ist, dass seine elektronische Resistivität weniger als 20 Ohm.cm bei 400 °C beträgt.

11. Struktur nach Anspruch 9 oder 10, wobei das anorganische, poröse Material eine Mischung aus Siliziumcarbid, eventuell dotiert, und wenigstens ein anorganisches, durch Sauerstoffionen leitendes Material, beispielsweise vom Typ Fluorit-Struktur oder mit Perowskit-Struktur oder mit Bimevox-Struktur oder mit Lamox-Struktur oder mit Apatit-Struktur, oder wenigstens ein anorganisches, protonenleitendes Material, beispielsweise vom Typ Perowskit, oder vom Typ BaCe₁₋ₓMₓO_{3-α}, oder aber eine Verbindung aus der Familie LaₓSr₁₋ₓSCO_{3-α} umfasst oder hiervon gebildet ist.

12. Struktur nach Anspruch 9 oder 10, wobei das anorganische, poröse Material Siliziumcarbid, eventuell dotiert, in dessen Poren eine Mischung aus dem Reduktionskatalysator A, dem Oxidationskatalysator B und wenigstens einem anorganischen, durch Sauerstoffionen leitenden Material, beispielsweise vom Typ Fluorit-Struktur oder mit Perowskit-Struktur oder mit Bimevox-Struktur oder mit Lamox-Struktur oder mit Apatit-Struktur, oder aus wenigstens einem anorganischen, protonenleitenden Material, beispielsweise vom Typ Perowskit, oder vom Typ BaCe₁₋ₓMₓO_{3-α}, oder aber einer Verbindung aus der Familie LaₓSr_{1- x}ScO_{3-α} abgeschieden ist, umfasst oder hiervon gebildet ist.
